(19) Europäisches Patentamt
European Patent Office
Office européen des brevets

(11) **EP 4 394 595 A1**

(12) **EUROPEAN PATENT APPLICATION**
published in accordance with Art. 153(4) EPC

(43) Date of publication:
**03.07.2024 Bulletin 2024/27**

(51) International Patent Classification (IPC):
**G06F 9/48** (2006.01)

(21) Application number: **22874890.1**

(86) International application number:
**PCT/CN2022/121620**

(22) Date of filing: **27.09.2022**

(87) International publication number:
**WO 2023/051505 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2021 CN 202111166727**

(71) Applicant: **Huawei Technologies Co., Ltd.**
**Shenzhen, Guangdong 518129 (CN)**

(72) Inventors:
• **ZHU, Fangzhou**
**Shenzhen, Guangdong 518129 (CN)**
• **LUO, Wanqian**
**Shenzhen, Guangdong 518129 (CN)**
• **ZHEN, Huiling**
**Shenzhen, Guangdong 518129 (CN)**
• **LI, Xijun**
**Shenzhen, Guangdong 518129 (CN)**
• **YUAN, Mingxuan**
**Shenzhen, Guangdong 518129 (CN)**
• **ZENG, Jia**
**Shenzhen, Guangdong 518129 (CN)**

(74) Representative: **Isarpatent**
**Patent- und Rechtsanwälte**
**Barth Hassa Peckmann & Partner mbB**
**Friedrichstraße 31**
**80801 München (DE)**

(54) **JOB SOLVING METHOD AND APPARATUS**

(57) This application discloses a task solving method. The method includes: obtaining importance of each first scheduling constraint in a plurality of first scheduling constraints in a first linear-programming task, where the importance indicates a degree of contribution of the first scheduling constraint to reducing a time for solving the first linear-programming task; sampling the plurality of first scheduling constraints based on the importance, to obtain a subset of the obtained plurality of first scheduling constraints, where the importance is used to determine sampling probability of the first scheduling constraints; constructing a second linear-programming task based on the subset of the plurality of first scheduling constraints; solving the second linear-programming task, to obtain a first solving result; and using a first solving result as an initial value of the first linear-programming task, and solving an initialized first linear-programming task. Because the importance represents a degree of contribution of the first scheduling constraint to reducing the time for solving the first linear-programming task, in this application, a solution of a sub-model obtained through sampling may be close to an optimal solution, thereby accelerating a process of solving the first linear-programming task.

FIG. 3

**Description**

This application claims priority to Chinese Patent Application No. 202111166727.3, filed with the China National Intellectual Property Administration on September 30, 2021 and entitled "TASK SOLVING METHOD AND APPARATUS THEREOF", which is incorporated herein by reference in its entirety.

**TECHNICAL FIELD**

This application relates to the scheduling field, and in particular, to a task solving method and an apparatus for the task solving method.

**BACKGROUND**

Scheduling is one of the most common issues in phases such as large-scale manufacturing, logistics, or production, and scheduling has different meanings in different scenarios. For example, logistics scheduling means that, in a logistics process, a logistics company properly arranges and schedules its vehicles and personnel based on a weight, destination, specifications, and urgency of goods to be delivered. Scheduling in a production environment means that, for several tasks (jobs), task sorting and matching between tasks and machines (schedulable resources) are performed based on production capacities of different machines in different production lines and production requirements. Scheduling (timetabling) of workers in a large factory or an air crew in an airport is also a scheduling issue, because an objective of such an issue is also to complete, based on work characteristics of the workers or the air crew and scenario requirements, optimal matching in different time periods. Therefore, the core is sorting and optimal allocation, but not limited to whether the tasks are related to persons or goods. In general, an objective of a scheduling issue is to obtain sequencing corresponding to a minimum total time of work (makespan) on the premise of a given number of tasks.

Many scheduling issues (for example, production scheduling, line scheduling, and manufacturing network layout) may be modeled as a mathematical issue to be solved. Linear programming (linear programming, LP) is a modeling method most widely used. A linear-programming model may include an objective function and constraints. The objective function is a function designed based on a to-be-optimized objective and variables that affect the objective. For example, in a production scheduling issue, an objective of entire production scheduling is generally to find an optimal manufacturing plan when all resource constraints are met, so that a requirement satisfaction rate is the highest and an overall cost is the lowest (for example, the cost may include but is not limited to a manufacturing cost, an inventory cost, and a transit cost). In this case, the objective function may be a function used to represent a maximum satisfaction rate and a minimum cost. In addition, the constraints mean other restrictive conditions that need to be met in a process of solving the objective function.

However, as scenario complexity increases, a quantity of scheduling constraints in a linear-programming task is usually relatively large, and a solving time required for solving the linear-programming task is very long.

**SUMMARY**

According to a first aspect, this application provides a task solving method, and the method includes:

obtaining a first linear-programming task, where the first linear-programming task includes a plurality of first scheduling constraints;
in a possible implementation, a terminal device may transfer the first linear-programming task as a to-be-solved model to a server, so that the server can obtain the first linear-programming task. For another example, a terminal device may use the first linear-programming task as prior information to be used for solving a to-be-solved model, that is, transfer at least one historical model including the first linear-programming task to a server, so that the server can obtain the at least one historical model including the first linear-programming task;
generally, when a quantity of constraints in a linear-programming task is relatively large, a solving time required for solving the linear-programming task is very long. Therefore, portion of constraints in the linear-programming task may be first selected, to perform solving based on the selected portion of constraints, and a solving result (states of solving variables in the selected portion of constraints) is assigned to the linear-programming task. This is equivalent to using the solving result as an initial value of the linear-programming task, and solving the linear-programming task. If the solving result of the selected portion of constraints is basically consistent (or described as being quite close to, where that the solving result herein is basically consistent may be understood as that parameter values of solving variables in same constraints are basically consistent) with a solving result that is obtained after the linear-programming task is solved, a quantity of times of iteration required for solving the linear-programming task is relatively small, that is, solving speed of the linear-programming task can be improved;

therefore, before the first linear-programming task is solved, portion of constraints need to be selected for solving, and an obtained solving result is almost close to a solving result of the first linear-programming task;

in this embodiment of this application, importance is used as a basis for selecting the portion of the plurality of first scheduling constraints, where the importance may indicate a degree of contribution to reducing a time for solving the first linear-programming task. The indicating a degree of contribution to reducing a time for solving the first linear-programming task may be understood as: when a sub-model of the to-be-solved model is being constructed (that is, the portion of constraints in the to-be-solved model are selected to construct the sub-model), in a case in which a solving result of the sub-model is used as an initial value of the first linear-programming task to-be-solved model, the sub-model includes a degree of contribution of the first linear-programming task to reducing a time for solving the to-be-solved model;

specifically, one subtask (a second programming task) may be obtained by sampling the plurality of first scheduling constraints by using the importance as sampling probability. A scheduling constraint in the subtask is a constraint that has a relatively high degree of contribution to reducing the time for solving the first linear-programming task. Therefore, a solving result that is obtained after the second programming task is solved is basically consistent (or described as being quite close to, where that the solving result herein is basically consistent may be understood as that parameter values of solving variables in same constraints are basically consistent) with a solving result that is obtained after the first programming task is solved;

in a possible implementation, the importance may be obtained based on prior information, where the prior information may be one or more models that are of a same type as the to-be-solved model (the first linear-programming task); and the same type may be understood as: types and quantities of constraints included in linear-programming tasks are consistent or basically consistent, that is, the first linear-programming task is consistent or basically consistent with types and quantities of constraints included in the one or more models in the prior information;

when importance of each constraint is being determined, each linear-programming task in the prior information may be directly solved, to obtain a solving time for solving each linear-programming task (if the linear-programming task has been solved, the solving time may be directly obtained); then a sub-model is extracted and solved for the one or more linear-programming models in the prior information, the linear-programming model is initialized based on a solving result, and then the linear-programming model is solved, to obtain another solving time; and by comparing the solving time for directly solving each linear-programming task with the solving time for solving the linear-programming task initialized based on the solving result of the sub-model, a degree of contribution of constraints in the sub-model to reducing the time for solving the linear-programming task can be learned;

for quantization of the foregoing importance, a probability may be assigned to each constraint of the to-be-solved model (where the probability may be quantization of the foregoing importance); sampling is performed on the to-be-solved model based on the probability, to construct a sub-model; the probability is updated by comparing the solving time for directly solving each linear-programming task with the solving time for solving the linear-programming task initialized based on the solving result of the sub-model; and iteration is performed for a specific quantity of times, and then information used to accurately describe importance of the constraints to reducing the time for solving the linear-programming task may be obtained (where a manner of updating the importance is described in a candidate embodiment); and

each scheduling constraint in the sub-model (for example, the second linear-programming task in this embodiment of this application) obtained based on the sampling of the importance makes a very high contribution to reducing the time for solving the linear-programming task; therefore, a time of a process of solving a first linear-programming model initialized based on a solving result of the second linear-programming task may be greatly shortened;

sampling the plurality of first scheduling constraints based on the importance, to obtain a subset of the obtained plurality of first scheduling constraints, where the importance is used to determine sampling probability of the first scheduling constraints;

constructing a second linear-programming task based on the subset of the plurality of first scheduling constraints; and solving the second linear-programming task, to obtain a first solving result; and using the first solving result as an initial value of the first linear-programming task, and solving an initialized first linear-programming task, to obtain a second solving result.

Optionally, the first solving result may include a parameter value (or a parameter state) of at least one solving variable in the subset of the plurality of first scheduling constraints.

An embodiment of this application provides a task solving method. The method includes: obtaining a first linear-programming task, where the first linear-programming task includes a plurality of first scheduling constraints; obtaining importance of each first scheduling constraint in the plurality of first scheduling constraints, where the importance indicates a degree of contribution of the first scheduling constraint to reducing a time for solving the first linear-programming task; sampling the plurality of first scheduling constraints based on the importance, to obtain a subset of the obtained plurality of first scheduling constraints, where the importance is used to determine sampling probability of the first scheduling constraints; constructing a second linear-programming task based on the subset of the plurality of first scheduling constraints; solving the second linear-programming task, to obtain a first solving result; and using the first solving result as an initial value of the first linear-programming task, and solving an initialized first linear-programming task, to obtain a second solving result. In the foregoing manner, on one hand, key constraints in the first linear-programming task are selected to construct a sub-model (the second linear-programming task), and then a solution of the sub-model is used to solve the first linear-programming task, to accelerate a solving process. On the other hand, when the sub-model is being constructed, sampling is performed on the first linear-programming task based on the importance. Because the importance represents a degree of contribution of the first scheduling constraint to reducing the time for solving the first linear-programming task, the solution of the sub-model obtained through sampling is close to an optimal solution, thereby accelerating a process of solving the first linear-programming task.

In a possible implementation, the first linear-programming model may be prior information used to update the importance. In this case, the probability may be updated by comparing a solving time for directly solving each linear-programming task with a solving time for solving the linear-programming task initialized based on a solving result of the sub-model; and iteration is performed for a specific quantity of times, and then information, which is used to accurately describe importance of the constraints to reducing the time for solving the linear-programming task, may be obtained.

Specifically, a first solving time for solving the second linear-programming task and a second solving time for solving the initialized first linear-programming task may be obtained; an additive sum of the first solving time and the second solving time may be used as a solving time for solving the linear-programming task initialized based on a solving result of the sub-model; then the first linear-programming task is solved to obtain a third solving time for solving the first linear-programming task, where the third solving time may be considered as a solving time for directly solving the first linear-programming task; and the importance of each first scheduling constraint may be updated based on a reduction degree of an additive sum of the first solving time and the third solving time relative to the first solving time, where the updated importance is positively correlated with the reduction degree.

It needs to be understood that, a time required in a process of obtaining the second linear-programming task through sampling may alternatively be used as a part of the solving time for solving the linear-programming task initialized based on the solving result of the sub-model. In other words, a sampling time for sampling the plurality of first scheduling constraints may be obtained, and the importance of each first scheduling constraint may be updated based on a reduction degree of an additive sum of the first solving time, the third solving time, and the sampling time relative to the first solving time.

In a possible implementation, the method further includes: obtaining a third linear-programming task, where the third linear-programming task includes a plurality of the second scheduling constraints, and the plurality of second scheduling constraints and the plurality of first scheduling constraints are of a same constraint type; obtaining importance of each second scheduling constraint in the plurality of second scheduling constraints, where the updated importance of each first scheduling constraint is used as importance of the second scheduling constraints that are of the same constraint type; sampling the plurality of second scheduling constraints based on the importance of each second scheduling constraint, to obtain a fourth linear-programming task, where the importance of each second scheduling constraint is used to determine sampling probability of the second scheduling constraint, and the fourth linear-programming task includes a portion of the plurality of second scheduling constraints; solving the fourth linear-programming task, to obtain a third solving result; and using the third solving result as an initial value of the third linear-programming task, and solving an initialized third linear-programming task, to obtain a fourth solving result.

In a possible implementation, the second linear-programming task includes M solving variables, and the first solving result includes parameter values of various solving variables; and
the using the first solving result as an initial value of the first linear-programming task includes:
using the parameter values of various solving variables in the first solving result as parameter values of M solving variables in the first linear-programming task.

In a possible implementation, the first linear-programming task is used to allocate a scheduling resource to at least one to-be-scheduled task, the first scheduling constraints are constraints that the scheduling resource meets, and the scheduling resource is a production line, or production equipment, or a manufacturer.

In a possible implementation, after the second solving result is obtained, a new constraint (for example, a second scheduling constraint) may be further added, and the second scheduling constraint may be obtained, where the second scheduling constraint includes a relaxation variable and an upper bound of the relaxation variable; and the second scheduling constraint is added to the first linear-programming task, to obtain an updated first linear-programming task, and the updated first linear-programming task is solved. Specifically, a proper bound (value range) may be set, based on an actual meaning of the new variable, for a new variable (relaxation variable) involved in the newly-added constraint, and an initial state value of the variable is modified, to change a state to the bound set for the variable, so that an initial solution is feasible to the newly-added constraint, thereby accelerating the solving of linear programming.

In this application, an upper bound and an initial state of a newly-added relaxation variable may be preset in a continuous solving scenario, to accelerate continuous solving.

An embodiment of this application further provides a system. The system may include a terminal device and a server. The terminal device may send a to-be-solved model (a first linear-programming task) and prior information that includes a plurality of historical models to the server. The server may perform computing based on the prior information that includes the plurality of historical models, to obtain converged importance; sample the first linear-programming task based on the importance; perform steps 301 to 303 in the foregoing embodiment, to obtain a second solving result; and return the second solving result to the terminal device.

In addition, the terminal device may send, to the server, a to-be-solved model and prior information that includes a plurality of historical models (including a first linear-programming task); and the server may perform computing based on the prior information that includes the plurality of historical models, to obtain converged importance (for a computing process, refer to descriptions related to importance updating in the foregoing embodiment), sample the to-be-solved model based on the importance, and solve the to-be-solved model.

According to a second aspect, this application provides a task solving apparatus, where the apparatus includes:

an obtaining module, configured to obtain a first linear-programming task, where the first linear-programming task includes a plurality of first scheduling constraints; and
obtain importance of each first scheduling constraint in the plurality of first scheduling constraints, where the importance indicates a degree of contribution of the first scheduling constraint to reducing a time for solving the first linear-programming task;
a sampling module, configured to sample the plurality of first scheduling constraints based on the importance, to obtain a subset of the obtained plurality of first scheduling constraints, where the importance is used to determine sampling probability of the first scheduling constraints; and
construct a second linear-programming task based on the subset of the plurality of first scheduling constraints; and
a solving module, configured to solve the second linear-programming task, to obtain a first solving result; and
use the first solving result as an initial value of the first linear-programming task, and solve an initialized first linear-programming task, to obtain a second solving result.

In a possible implementation, both the first linear-programming task and the second linear-programming task include a programming objective.

In a possible implementation, the obtaining module is further configured to:

obtain a first solving time for solving the second linear-programming task and a second solving time for solving the initialized first linear-programming task;
the solving module is further configured to solve the first linear-programming task, to obtain a third solving time for solving the first linear-programming task; and
the apparatus further includes:
an importance updating module, configured to update, based on a reduction degree of an additive sum of the first solving time and the third solving time relative to the first solving time, the importance of each first scheduling constraint, where the updated importance is positively correlated with the reduction degree.

In a possible implementation, the obtaining module is further configured to:

obtain a sampling time for sampling the plurality of first scheduling constraints; and
the importance updating module is specifically configured to:
update, based on a reduction degree of an additive sum of the first solving time, the third solving time, and the sampling time relative to the first solving time, the importance of each first scheduling constraint.

In a possible implementation, the obtaining module is further configured to:

obtain a third linear-programming task, where the third linear-programming task includes a plurality of the second scheduling constraints, and the plurality of second scheduling constraints and the plurality of first scheduling constraints are of a same constraint type; and
obtain importance of each second scheduling constraint in the plurality of second scheduling constraints, where the updated importance of each first scheduling constraint is used as importance of the second scheduling constraints that are of the same constraint type;
the sampling module is further configured to:

sample the plurality of second scheduling constraints based on the importance of each second scheduling constraint, to obtain a fourth linear-programming task, where the importance of each second scheduling constraint is used to determine sampling probability of the second scheduling constraint, and the fourth linear-programming task includes a portion of the plurality of second scheduling constraints; and
the solving module is further configured to:

solve the fourth linear-programming task, to obtain a third solving result; and
use the third solving result as an initial value of the third linear-programming task, and solve an initialized third linear-programming task, to obtain a fourth solving result.

In a possible implementation, the second linear-programming task includes M solving variables, and the first solving result includes parameter values of various solving variable; and
the solving module is specifically configured to:
use the parameter values of various solving variables in the first solving result as parameter values of M solving variables in the first linear-programming task.

In a possible implementation, the first linear-programming task is used to allocate a scheduling resource to at least one to-be-scheduled task, the first scheduling constraints are constraints that the scheduling resource meets, and the scheduling resource is a production line, or production equipment, or a manufacturer.

In a possible implementation, the obtaining module is further configured to:

obtain a second scheduling constraint after the second solving result is obtained, where the second scheduling constraint includes a relaxation variable and an upper bound of the relaxation variable; and
the solving module is further configured to: add the second scheduling constraint to the first linear-programming task, to obtain an updated first linear-programming task, and solve the updated first linear-programming task.

According to a third aspect, an embodiment of this application provides an apparatus, including a memory, a processor, and a bus system. The memory is configured to store a program, and the processor is configured to execute the program in the memory, to perform the method in the first aspect and any one of optional implementations of the first aspect.

According to a fourth aspect, an embodiment of this application further provides a system, where the system includes at least one processor, at least one memory, and at least one communications interface; and the processor, the memory, and the communications interface are connected and communicate with each other by using a communications bus;

the memory is configured to store application program code for executing the foregoing solutions, and the processor controls execution; and the processor is configured to execute the application program code stored in the memory, to obtain a task scheduling result, where the code stored in the memory can execute the task solving method; and the communications interface is configured to communicate with another device or a communications network, to send the task solving result to the device or the communications network.

According to a fifth aspect, an embodiment of this application provides a computer-readable storage medium, where the computer-readable storage medium stores a computer program, and when the computer program runs on a computer, the computer is enabled to perform the method in the first aspect and any one of optional implementations of the first aspect.

According to a sixth aspect, an embodiment of this application provides a computer-readable storage medium. The computer-readable storage medium stores one or more instructions, and when the instructions are executed by one or more computers, the one or more computers are enabled to implement the second aspect and any one of optional implementations of the second aspect.

According to a seventh aspect, an embodiment of this application provides a computer program. When the computer program runs on a computer, the computer is enabled to perform the method in the first aspect and any one of optional implementations of the first aspect.

According to an eighth aspect, this application provides a chip system. The chip system includes a processor, configured to support a terminal device or a server in implementing functions in the foregoing aspects, for example, sending or processing data in the foregoing method, or information. In a possible design, the chip system further includes a memory. The memory is configured to store program instructions and data that are needed for the terminal device or the server. The chip system may include a chip, or may include a chip and another discrete component.

An embodiment of this application provides a task solving method. The method includes: obtaining a first linear-programming task, where the first linear-programming task includes a plurality of first scheduling constraints; obtaining importance of each first scheduling constraint in the plurality of first scheduling constraints, where the importance indicates a degree of contribution of the first scheduling constraint to reducing a time for solving the first linear-programming task;

sampling the plurality of first scheduling constraints based on the importance, to obtain a subset of the obtained plurality of first scheduling constraints, where the importance is used to determine sampling probability of the first scheduling constraints; constructing a second linear-programming task based on the subset of the plurality of first scheduling constraints; solving the second linear-programming task, to obtain a first solving result; and using the first solving result as an initial value of the first linear-programming task, and solving an initialized first linear-programming task, to obtain a second solving result. In the foregoing manner, on one hand, key constraints in the first linear-programming task are selected to construct a sub-model (the second linear-programming task), and then a solution of the sub-model is used to solve the first linear-programming task, to accelerate a solving process. On the other hand, when the sub-model is being constructed, sampling is performed on the first linear-programming task based on the importance. Because the importance represents a degree of contribution of the first scheduling constraint to reducing the time for solving the first linear-programming task, the solution of the sub-model obtained through sampling is close to an optimal solution, thereby accelerating a process of solving the first linear-programming task.

## BRIEF DESCRIPTION OF DRAWINGS

FIG. 1 is a schematic diagram of an application architecture according to an embodiment of this application;
FIG. 2 is a schematic diagram of a server architecture according to an embodiment of this application;
FIG. 3 is a schematic flowchart of a task solving method according to an embodiment of this application;
FIG. 4 is a schematic flowchart of a task solving method according to an embodiment of this application;
FIG. 5 is a schematic diagram of a production scheduling task according to an embodiment of this application;
FIG. 6 is a schematic diagram of a structure of a task solving apparatus according to an embodiment of this application;
FIG. 7 is a schematic diagram of a structure of a terminal device according to an embodiment of this application;
FIG. 8 is a schematic diagram of a structure of a server according to an embodiment of this application; and
FIG. 9 is a schematic diagram of a structure of a chip according to an embodiment of this application.

## DESCRIPTION OF EMBODIMENTS

The following describes embodiments of this application with reference to the accompanying drawings in embodiments of this application. Terms used in embodiments of this application are merely intended to explain specific embodiments of this application, and are not intended to limit this application.

The following describes embodiments of this application with reference to the accompanying drawings. A person of ordinary skill in the art may learn that, with development of technologies and emergence of new scenarios, technical solutions provided in embodiments of this application are also applicable to a similar technical issue.

In the specification, claims, and accompanying drawings of this application, the terms "first", "second", and the like are intended to distinguish between similar objects but do not necessarily indicate a specific order or sequence. It needs to be understood that, the terms used in such a way are interchangeable in proper circumstances, and this is merely a discrimination manner for describing objects having a same attribute in embodiments of this application. In addition, the terms "include", "contain" and any other variants mean to cover non-exclusive inclusion, so that a process, method, system, product, or device that includes a series of units is not necessarily limited to those units, but may include other units not expressly listed or other units inherent to such a process, method, system, product, or device.

Embodiments of this application may be applied to solving linear-programming optimization issues in a plurality of scenarios (such as a supply chain, cloud computing, scheduling, and storage optimization), to accelerate efficiency of solving these issues by a linear-programming solver.

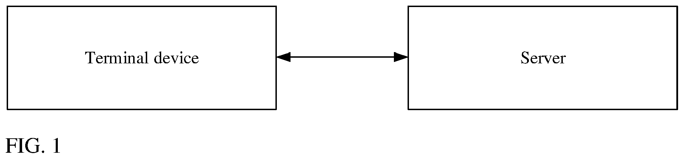

Refer to FIG. 1. FIG. 1 is a schematic diagram of an application structure according to an embodiment of this application. A task solving method provided in this application may be deployed as a solver on a cloud-side server. A terminal device may transfer a to-be-solved model (for example, a linear-programming task) to a cloud-side server. The cloud-side server may solve the to-be-solved model based on a solver deployed on the cloud-side server, and transfer a solving result to the terminal device.

For example, a user may construct a to-be-solved model based on the user's own service scenario. During solving, some historical models with a same type of issues may be transferred to a server, and the server may invoke a solver to quickly output an optimal solution for the user-input model. Based on the solution, the user may use a function provided by a platform to generate a data report or process the data report to obtain a desired result.

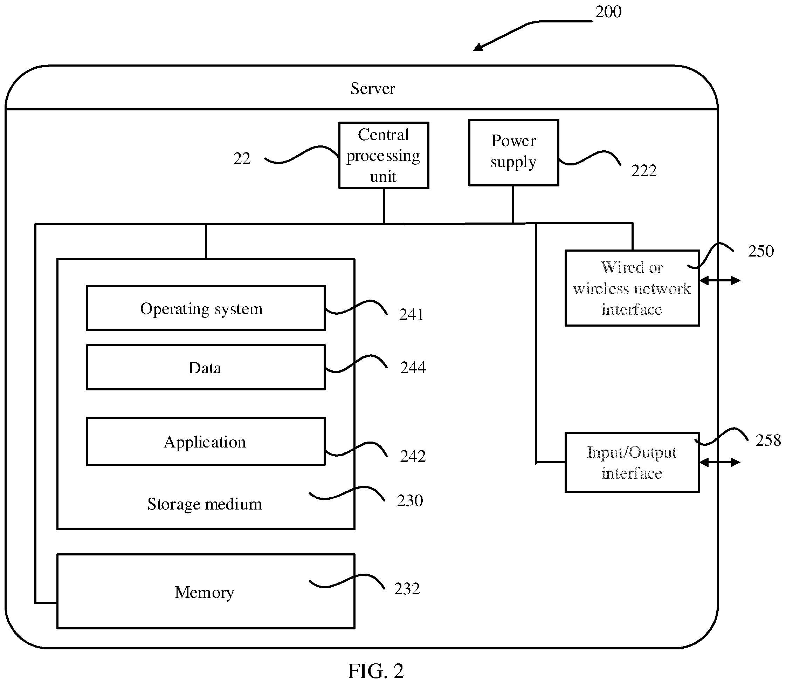

Refer to FIG. 2. FIG. 2 is a schematic diagram of an architecture of a server 200 according to an embodiment of this application. Specifically, the server 200 is implemented by one or more servers. The server 200 may greatly differ due to different configurations or performance, and may include one or more central processing units (central processing units, CPU) 22 (for example, one or more processors), a memory 232, and one or more storage media 230 (for example, one or more mass storage devices) that store an application 242 or data 244. The memory 232 and the storage medium 230 may be used for transient storage or persistent storage. A program stored in the storage medium 230 may include one or more modules (not shown in FIG. 2), and each module may include a series of instruction operations on the server. Further, the central processing unit 22 may be configured to communicate with the storage medium 230, to perform a series of instruction operations in the storage medium 230 on the server 200.

The server 200 may further include one or more power supplies 222, one or more wired or wireless network interfaces 250, and one or more input/output interfaces 258; or one or more operating systems 241, for example, Windows Server™, Mac OS X™, Unix™, Uinux™, and FreeBSD™.

In this embodiment of this application, the central processing unit 22 is configured to perform the task solving method described in embodiments of this application.

It needs to be understood that the task solving method provided in embodiments of this application may alternatively be deployed as a solver on a terminal device on a terminal side. This is not limited herein.

In embodiments of this application, a to-be-solved model may be used to solve a scheduling issue. Scheduling is one of the most common issues in a phase such as large-scale manufacturing, logistics, or production, and scheduling has different meanings in different scenarios. For example, logistics scheduling means that, in a logistics process, a logistics company properly arranges and schedules its vehicles and personnel based on a weight, destination, specifications, and urgency of goods to be delivered.

Scheduling in a production environment means that, for several tasks (jobs), task sorting and matching between tasks and production equipment are performed based on production capacities of different machines in different production lines and production requirements. In other words, a plurality of tasks are assigned to production equipment in each production line.

For example, in a job-shop scheduling (job-shop scheduling) scenario, n workpieces are manufactured on m machines, there is a specific manufacturing technology for each workpiece, a manufacturing sequence of each workpiece and a time spent in each process are given, and a manufacturing sequence of the workpieces on each machine is arranged, so that a specific indicator is optimal. It is not required that each workpiece be executed on each machine.

For example, in a flow-shop scheduling (flow-shop scheduling) scenario, for this type of scheduling issue, each task needs to be executed in every phase in sequence, without involving matching between tasks and phases, but mostly an execution sequence of tasks is to be determined, to avoid a long overall completion time arising from a long waiting time.

Slightly different from general goods scheduling, scheduling of workers in a large-scale factory or an air crew (timetabling) in an airport is also a scheduling issue. This is because an objective of this issue is to complete, based on work characteristics of the workers and the air crew and scenario requirements, optimal matching in different time segments. Therefore, the core is sorting and optimal matching, but not confined to whether a "task" is related to people or goods. In general, an objective of a scheduling issue is to obtain sequencing corresponding to a minimum total time of work (makespan) on the premise of a given number of tasks.

In addition, a scheduling issue is a method for allocating resources required for work in a computer. A resource may mean a virtual computing resource, such as a thread, a process, or a data flow; or may mean a hardware resource, such as a processor, a network connection card, or an expansion card. A program that performs a scheduling job is called a scheduler. Common implementation of a scheduler makes all computing resources stay in a busy state (in load balancing), allowing a plurality of users to share a system resource efficiently at the same time or achieving specified service quality.

Many scheduling issues (for example, production scheduling, line scheduling, and manufacturing network layout) may be modeled as a mathematical issue to be solved. Linear programming (linear programming, LP) is a modeling method most widely used. Currently, among algorithms on which a linear-programming solver depends at a bottom layer, Simplex is an algorithm most widely used, and is also a type of algorithm substantially optimized by various linear-programming solvers.

For the Simplex algorithm, generally the algorithm first selects an initial feasible basic solution, and then checks whether the solution has reached an optimal solution. Then LU decomposition is performed on a base matrix to calculate an inverse of the base matrix. LU decomposition is performed only once every K times of iteration; and for other iteration, updates of an L matrix and a U matrix are updated by using an incremental method. Then the algorithm selects, based on a heuristic rule, an entering variable and a leaving variable to update a basic variable. Such a cycle is executed continuously until an optimal solution is found, or until a state of the issue is found to be abnormal, and then the entire algorithm exits.

Solving falls into two types based on the use of a solver: standard solving and continuous solving. In standard solving, a solver performs complete solving once without any prior information; and steps such as pre-solving, solving, and post-processing are separately performed. In a standard process, a pre-solving module is added before the Simplex algorithm and a post-processing module is added after the Simplex algorithm. The pre-solving module simplifies a model. A degree of simplification varies according to a structure of the model. Generally, a model scale (a quantity of variables and a quantity of constraints) may be reduced by 30% to 70%. In this way, Simplex can solve a relatively simple model, thereby accelerating solving. The post-processing module maps a solution of a simple model, which is generated through pre-solving, back to an original issue, to finally obtain a solution for the original model.

Continuous solving means that, an optimal solution is obtained after a model is solved once, then the model is partially modified, for example, some variable constraints are added or upper and lower limits of an existing variable are modified, and then solving is performed again. In this way, a process of performing resolving based on a previous optimal solution is referred to as continuous solving.

However, in the foregoing described existing standard solving process, no prior knowledge is used to construct an initial feasible basis. Therefore, a constructed initial feasible basis is relatively simple, and a quantity of iteration times required for performing Simplex algorithm iteration based on the simple feasible basis is rather large, causing a very long time. In addition, adjustment of an initial variable state is rather direct during continuous solving, causing a very long time to find an initial feasible basic solution during continuous solving. In the task solution method provided in embodiments of this application, an initial feasible basis may be constructed based on prior knowledge, to reduce a solving time.

To make this application clearer, first, the following briefly describes a processing flow and some concepts mentioned in this application.

Linear programming (Linear Programming, LP): as an important branch of operations research, it has been studied early, developed rapidly, applied widely, and substantially matured. It is a mathematical method to assist people in scientific management, and a mathematical theory and method for studying an extremum-value problem of a linear objective function under linear constraints.

Constraints (Constraints): constraints in a mathematical scheduling issue, that is, numerical requirements for a decision variable.

Basic solution (Basic Solution): a basis in a coefficient matrix of a constraint equation set is found, a non-base variable of the basis is set to 0, and then the m-variable linear equation set is solved to obtain a unique solution. This solution is called a basic solution in linear programming.

Basic feasible solution (Basic Feasible Solution): a basic concept in processing linear programming. A basic solution meeting a non-negative condition is called a basic feasible solution.

Simplex (Simplex): Simplex is one of the most commonly used and effective algorithms for solving a linear-programming issue. A basic idea of Simplex is as follows: first, a vertex of a feasible domain is found, and whether the vertex is optimal is determined based on a rule; if the vertex is not optimal, another vertex adjacent to the vertex is transferred to, and an objective function value is made better; and this goes on until an optimal solution is found.

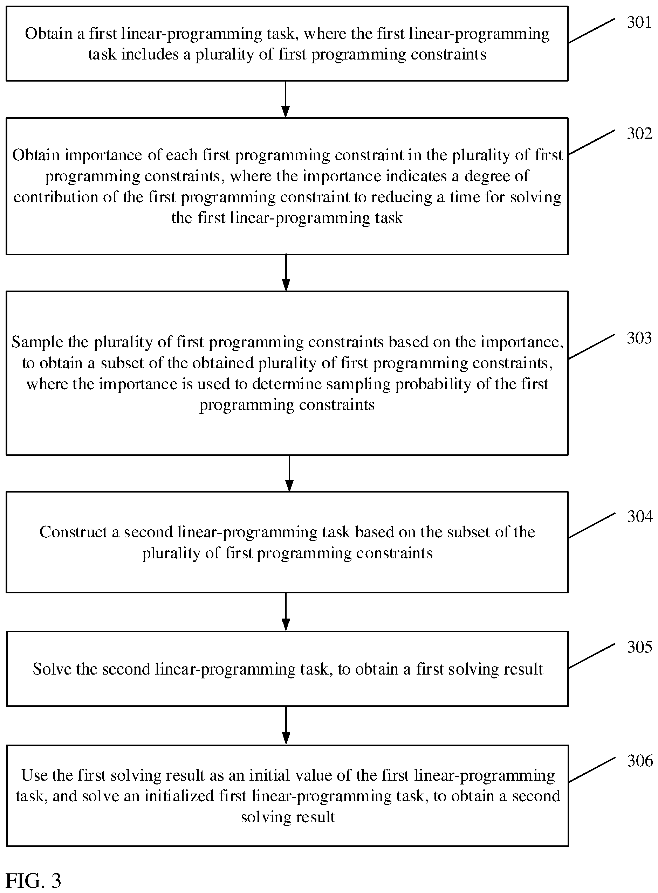

The following describes embodiments of this application with reference to the accompanying drawings in embodiments of this application. Terms used in descriptions of implementations of this application are merely intended to explain specific embodiments of this application, and are not intended to limit this application. Refer to FIG. 3. FIG. 3 shows a task solving method according to an embodiment of this application. The method includes the following steps.

301: Obtain a first linear-programming task, where the first linear-programming task includes a plurality of first scheduling constraints.

In a possible implementation, step 301 may be performed by a server. For example, a terminal device may transfer the first linear-programming task as a to-be-solved model to a server, so that the server can obtain the first linear-programming task. For another example, a terminal device may use the first linear-programming task as prior information to be used for solving a to-be-solved model, that is, transfer at least one historical model including the first linear-programming task to a server, so that the server can obtain the at least one historical model including the first linear-programming task.

In general, a linear programming model may include an objective function and constraints, where the objective function is a function designed based on an objective of optimization to be performed and variables that affect the objective. For example, in a production scheduling issue, an objective of entire production scheduling is generally to find an optimal manufacturing plan when all resource constraints are met, so that a requirement satisfaction rate is the highest and an overall cost is the lowest (for example, the cost may include but is not limited to a manufacturing cost, an inventory cost, and a transit cost). In this case, the objective function may be a function used to represent a maximum satisfaction rate and a minimum cost. In addition, the constraints mean other restrictive conditions that need to be met in a process of solving the objective function.

In a possible implementation, the first linear-programming task is used to allocate a scheduling resource to at least one to-be-scheduled task, the first scheduling constraints are constraints that the scheduling resource meets, and the scheduling resource is a production line, or production equipment, or a manufacturer.

For example, in a product production scenario, a to-be-scheduled task may be a to-be-produced product; and in a personnel scheduling scenario, a to-be-scheduled task may be a person ready for production, or the like. This is not limited in this embodiment of this application.

In a product production scenario, each schedulable resource group in a plurality of schedulable resource groups may be a production line. For example, in a mobile phone production scenario, each schedulable resource group in a plurality of schedulable resource groups may be a production line of a mobile phone component, for example, may be a production line of a battery, a production line of a housing, or a production line of a chip. Correspondingly, each schedulable resource group may include a plurality of schedulable resources, and each schedulable resource in the plurality of schedulable resources is production equipment in the production line. For example, a battery production line may include a plurality of battery production devices, and a housing production line may include a plurality of housing production devices. This is not limited herein.

In a personnel scheduling scenario, each schedulable resource group in a plurality of schedulable resource groups may be a time segment. For example, in a personnel scheduling scenario, each schedulable resource group in a plurality of schedulable resource groups may be a day, for example, may be Monday, Tuesday, Wednesday, or a day in some months, or the like. Correspondingly, each schedulable resource group may include a plurality of schedulable resources, and each schedulable resource in the plurality of schedulable resources is a time sub-segment in the time segment, for example, a day may include a plurality of hours, a plurality of minutes, or a plurality of other time sub-segments. This is not limited herein.

The first scheduling constraint may include solving variables and constraints that the solving variables need to meet.

302: Obtain importance of each first scheduling constraint in the plurality of first scheduling constraints, where the importance indicates a degree of contribution of the first scheduling constraint to reducing a time for solving the first linear-programming task.

In a possible implementation, the first linear-programming task may be used as a to-be-solved model. When the first linear-programming task is being solved, importance of each first scheduling constraint may be first obtained, where the importance indicates a degree of contribution of the first scheduling constraint to reducing a time for solving the first linear-programming task.

Generally, when a quantity of constraints in a linear-programming task is relatively large, a solving time required for solving the linear-programming task is very long. Therefore, portion of constraints in the linear-programming task may be first selected, to perform solving based on the selected portion of constraints, and a solving result (states of solving variables in the selected portion of constraints) is assigned to the linear-programming task. This is equivalent to using the solving result as an initial value of the linear-programming task, and solving the linear-programming task. If the solving result of the selected portion of constraints is basically consistent (or described as being quite close to, where that the solving result herein is basically consistent may be understood as that parameter values of solving variables in same constraints are basically consistent) with a solving result that is obtained after the linear-programming task is solved, a quantity of times of iteration required for solving the linear-programming task is relatively small, that is, solving speed of the linear-programming task can be improved.

Therefore, before the first linear-programming task is solved, a a portion of constraints need to be selected for solving, and an obtained solving result is almost close to a solving result of the first linear-programming task.

In this embodiment of this application, importance is used as a basis for selecting the portion of the plurality of first scheduling constraints, where the importance may indicate a degree of contribution to reducing a time for solving the first linear-programming task. The indicating a degree of contribution to reducing a time for solving the first linear-programming task may be understood as: when a sub-model of the to-be-solved model is being constructed (that is, the portion of constraints in the to-be-solved model are selected to construct the sub-model), in a case in which a solving result of the sub-model is used as an initial value of the to-be-solved model, the sub-model includes a degree of contribution of the first linear-programming task to reducing a time for solving the to-be-solved model.

Specifically, one subtask (a second programming task) may be obtained by sampling the plurality of first scheduling constraints by using the importance as sampling probability. A scheduling constraint in the subtask is a constraint that has a relatively high degree of contribution to reducing the time for solving the first linear-programming task. Therefore, a solving result that is obtained after the second programming task is solved is basically consistent (or described as being quite close to, where that the solving result herein is basically consistent may be understood as that parameter values of solving variables in same constraints are basically consistent) with a solving result that is obtained after the first programming task is solved.

In a possible implementation, the importance may be obtained based on prior information, where the prior information may be one or more models that are of a same type as the to-be-solved model (the first linear-programming task); and the same type may be understood as: types and quantities of constraints included in linear-programming tasks are consistent or basically consistent, that is, the first linear-programming task is consistent or basically consistent with types and quantities of constraints included in the one or more models in the prior information.

When importance of each constraint is being determined, each linear-programming task in the prior information may be directly solved, to obtain a solving time for solving each linear-programming task (if the linear-programming task has been solved, the solving time may be directly obtained); then a sub-model is extracted and solved for the one or more linear-programming models in the prior information, the linear-programming model is initialized based on a solving result, and then the linear-programming model is solved, to obtain another solving time; and by comparing the solving time for directly solving each linear-programming task with the solving time for solving the linear-programming task initialized based on the solving result of the sub-model, a degree of contribution of constraints in the sub-model to reducing the time for solving the linear-programming task can be learned.

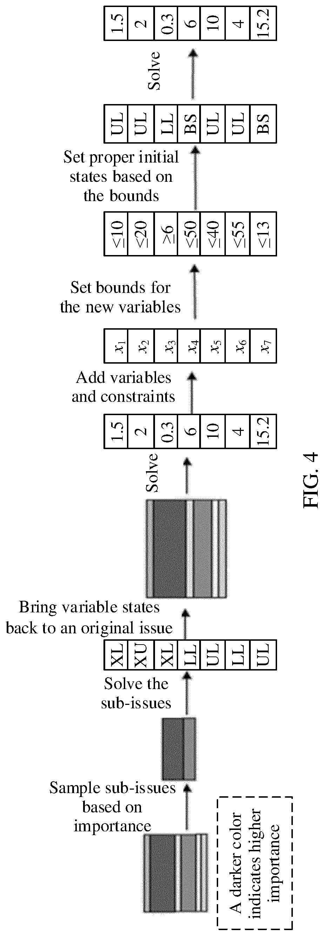

Refer to FIG. 4. For quantization of the foregoing importance, a probability may be assigned to each constraint of the to-be-solved model (where the probability may be quantization of the foregoing importance); sampling is performed on the to-be-solved model based on the probability, to construct a sub-model; the probability is updated by comparing the solving time for directly solving each linear-programming task with the solving time for solving the linear-programming task initialized based on the solving result of the sub-model; and iteration is performed for a specific quantity of times, and then information used to accurately describe importance of the constraints to reducing the time for solving the linear-programming task may be obtained (where a manner of updating the importance is described in a candidate embodiment).

Each scheduling constraint in the sub-model (for example, a second linear-programming task in this embodiment of this application) obtained based on the sampling of the importance makes a very high contribution to reducing the time for solving the linear-programming task; therefore, a time of a process of solving a first linear-programming model initialized based on a solving result of the second linear-programming task may be greatly shortened.

It needs to be understood that the first linear-scheduling model in this embodiment of this application may be prior information used to calculate the importance of each first scheduling constraint. In this case, the importance that is of each first scheduling constraint in the plurality of first scheduling constraints and that is obtained in step 302 may be initial importance or importance (not yet converged to meet a requirement) in an iteration process.

It needs to be understood that the prior information used to calculate the importance of each first scheduling constraint may include a plurality of models, the first linear-programming task may be one of the plurality of models, and the first linear-programming task may be randomly selected from the plurality of models.

For example, N historical models P that are homogeneous to the to-be-solved model, for example, a same type of optimization issues at different time points in the past, may be obtained. In addition, the N models have C types of constraints in total, where each type of constraint is represented by $c_i$; each issue is solved in advance: $P_i$, $i$ = 1, 2, ... , N; a time for directly solving the issues is obtained: $T_{P_i}$; importance of each type of constraint is set as $\alpha_{c_i}$, $i$ = 1, 2, ..., C, and an initial value of each type of constraint is $\alpha_{c_i}$ = 0.5 (or set to another initial value); a model $P_i$ is selected, a sub-model $P_i^j$ (including constraints $c_{j_1,...,c_{j_k}}$) is sampled based on a probability of $\alpha$, the sub-model is solved, then a solution of the sub-model is used as an initial value of an original issue to solve the original issue, and a total time $T_j$ (including a time for solving the sub-model) is recorded; and $\alpha_{c_{j_1}}$ to $\alpha_{c_{j_k}}$ are updated, for example, they may be updated based on the following formula: $\alpha_{c_i} = \alpha_{c_i} + \rho \times g(T_j, T_{P_i}, P_i^{(j)}, c_i)$; where $\rho$ is a step, $g(\cdot)$ is a probability updating function, and the foregoing steps are repeated until the importance is converged.

After the importance of each scheduling constraint is obtained, and before the first linear-programming task is solved, importance corresponding to each first scheduling constraint in the first linear-programming task may be obtained.

303: Sample the plurality of first scheduling constraints based on the importance, to obtain a subset of the obtained plurality of first scheduling constraints, where the importance is used to determine sampling probability of the first scheduling constraints.

304: Construct a second linear-programming task based on the subset of the plurality of first scheduling constraints.

In a possible implementation, a first scheduling constraint with higher importance is more probably to be sampled as a part of the second linear-programming task. Therefore, the second linear-programming task may include partial first scheduling constraints in the plurality of first scheduling constraints.

In a possible implementation, the first linear-programming model is a to-be-solved model or prior information used to update the importance. Converged importance may be used as sampling probability of each constraint, and the plurality of first scheduling constraints are sampled to obtain the second linear-programming task. Each scheduling constraint in the sub-model (for example, the second linear-programming task in this embodiment of this application) obtained based on the sampling of the importance makes a very high contribution to reducing the time for solving the linear-programming task; therefore, a time of a process of solving a first linear-programming model initialized based on a solving result of the second linear-programming task may be greatly shortened.

305: Solve the second linear-programming task, to obtain a first solving result.

In a possible implementation, the second linear-programming task includes M solving variables, and the first solving result may include parameter values of various solving variables, where the parameter values herein may be numerical values of an optimal solution or states of the solving variables. When the first solving result is used as an initial value of the first linear-programming task, specifically the parameter values of various solving variables in the first solving result may be used as parameter values of M solving variables in the first linear-programming task. In other words, the parameter values of the solving variables in the first solving result are assigned to the first linear-programming task, and an initial value of a first scheduling constraint that is in the first linear-programming task and that is not included in the second linear-programming task may be specified by a solver. This is not limited herein.

306: Use the first solving result as an initial value of the first linear-programming task, and solve an initialized first linear-programming task, to obtain a second solving result.

In a possible implementation, a solver may read the first solving result into the first linear-programming task, then assign an initial state of a solving variable $v_i$ in the first linear-programming task to $s_i$, and solve an initialized first linear-programming task, to obtain the second solving result.

In a possible implementation, the first linear-programming model may be a to-be-solved model. In this case, the second solving result may be a solving result of the to-be-solved model. After obtaining the second solving result, the server may return the second solving result to the terminal device.

In a possible implementation, after the second solving result is obtained, a new constraint (for example, a second scheduling constraint) may be further added, and the second scheduling constraint may be obtained, where the second scheduling constraint includes an objective solving variable and a relaxation variable; and the second scheduling constraint is added to the first linear-programming task, to obtain an updated first linear-programming task, and the updated first linear-programming task is solved. In other words, a proper bound (value range) may be set for a new variable involved in the newly-added constraint based on an actual meaning of the new variable, and an initial state value of the variable is modified, to change a state to the foregoing set bound, so that an initial solution is feasible to the newly-added constraint, thereby accelerating the solving of linear programming.

In this application, an upper bound and an initial state of a newly-added relaxation variable may be preset in a continuous solving scenario, to accelerate continuous solving.

In a possible implementation, the first linear-programming model may be prior information used to update the importance. In this case, the probability may be updated by comparing a solving time for directly solving each linear-programming task with a solving time for solving the linear-programming task initialized based on a solving result of the sub-model; and iteration is performed for a specific quantity of times, and then information used to accurately describe importance of the constraints to reducing the time for solving the linear-programming task may be obtained.

Specifically, a first solving time for solving the second linear-programming task and a second solving time for solving the initialized first linear-programming task may be obtained; an additive sum of the first solving time and the second solving time may be used as a solving time for solving the linear-programming task initialized based on a solving result of the sub-model; then the first linear-programming task is solved to obtain a third solving time for solving the first linear-programming task, where the third solving time may be considered as a solving time for directly solving the first linear-programming task; and the importance of each first scheduling constraint may be updated based on a reduction degree of an additive sum of the first solving time and the third solving time relative to the first solving time, where the updated importance is positively correlated with the reduction degree.

It needs to be understood that, a time required in a process of obtaining the second linear-programming task through sampling may alternatively be used as a part of the solving time for solving the linear-programming task initialized based on the solving result of the sub-model. In other words, a sampling time for sampling the plurality of first scheduling constraints may be obtained, and the importance of each first scheduling constraint may be updated based on a reduction degree of an additive sum of the first solving time, the third solving time, and the sampling time relative to the first solving time.

For example, a time spent in constructing the sub-model is recorded as $T_a$. A linear-programming solver is invoked to solve the sub-model (including a total of $K$ types of constraints $c_{j1},...,c_{jK}$), and obtain an optimal solution S of the sub-model. A time spent in solving the sub-model is recorded as $T_b$. Then the solution of the sub-model is brought as an initial solution into an original model $P_i$, and $P_i$ is solved again, where a time spent in this step is $T_c$. Finally, a total time obtained through the solving with importance sampling is recorded as $T_j = T_a + T_b + T_c$.

For example, each type of constraint $c_{j1}$ may be updated by executing the following formula: $\alpha_{c_{j_1}} = \min(\alpha_{c_{j_1}} + \rho \times \frac{T_{P_i} - T_j}{K}, 1)$, where $\rho$ may be a preset hyper-parameter.

The updating, based on a reduction degree of an additive sum of the first solving time and the third solving time relative to the first solving time, the importance of each first scheduling constraint may be a process of iteration of the importance. The importance may be updated based on other prior information, or by performing the foregoing iteration process for a plurality of times on the first linear-programming model, to obtain converged importance.

The server may solve the to-be-solved model based on the converged importance.

For example, if the to-be-solved model is an objective linear-programming task, scheduling constraints in the objective linear-programming task may be sampled based on the converged importance, to obtain a sub-model, and the sub-model is solved. Then a solving result is used as an initial value of the objective linear-programming task, and the objective linear-programming task is solved, to obtain a final solving result. The server may feed back the obtained final solving result to the terminal device.

For example, the to-be-solved model is a third linear-programming task. The third linear-programming task may be obtained, where the third linear-programming task includes a plurality of the second scheduling constraints, and the plurality of second scheduling constraints and the plurality of first scheduling constraints are of a same constraint type;

> importance of each second scheduling constraint in the plurality of second scheduling constraints is obtained, where the updated importance of each first scheduling constraint is used as importance of the second scheduling constraints that are of the same constraint type; and
>
> the plurality of second scheduling constraints are sampled based on the importance of each second scheduling constraint, to obtain a fourth linear-programming task, where the importance of each second scheduling constraint is used to determine sampling probability of the second scheduling constraint, and the fourth linear-programming task includes a portion of the plurality of second scheduling constraints; the fourth linear-programming task is solved, to obtain a third solving result; and the third solving result is used as an initial value of the third linear-programming task, and an initialized third linear-programming task is solved, to obtain a fourth solving result.

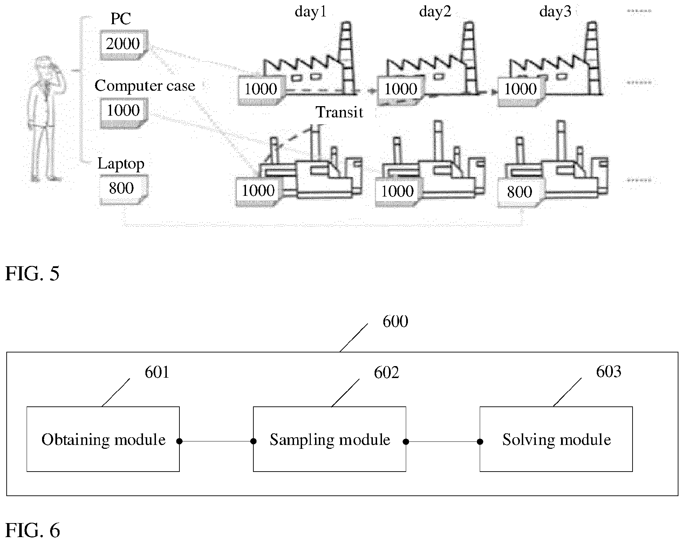

For example, a multi-factory production scheduling issue is used as an example. An objective of entire production scheduling is generally to find an optimal manufacturing plan when all resource constraints are met, so that a requirement satisfaction rate is the highest and an overall cost (including a manufacturing cost, an inventory cost, and a transit cost) is the lowest. FIG. 5 shows an example of production scheduling, assuming that a customer has ordered 2000 PCs, 1000 hosts, and 800 laptop computers. Then two factories can manufacture the three types of products (at most 1,000 products each day). One host is required for manufacturing one PC, and the PC can be assembled only in a first factory. The figure shows an optimal production scheduling solution. On a first day, 1000 hosts are manufactured in each of the two factories, and hosts in a second factory are transited to the first factory. On a second day, in the first factory, the hosts manufactured in the first day in the first factory are assembled into PCs; and in the second factory, 1000 more hosts are manufactured. On a third day, hosts transited on the first day from the second factory are assembled into 1000 PCs in the first factory, and finally 800 laptop computers are manufactured in the second factory. In this way, all requirements can be met and a total cost is the lowest. Multi-factory production scheduling is an issue of integer programming in essence. However, because solving complexity of integer programming is rather high, it is difficult to obtain an optimal solution in a specified time for such a huge-scale model. Therefore, a common way is to relax the issue into linear programming, and then adjust, by using some approximate methods, a real-number solution obtained through linear-programming solving to an integer solution.

First, production scheduling models in past three months are collected, to form a training dataset of about 90 models. In addition, there are 18 types of constraints on production scheduling, such as inventory constraints, production capacity constraints, pairing constraints, special-control constraints, SR constraints, order requirement postponement constraints, forecast requirement postponement constraints, and maximum substitution constraints.

The 90 models are first solved by using a linear-programming solver, a solving time $T_{P_i}$, $i = 1, \ldots, 90$ is recorded, importance probability of constraints is initialized as $\alpha_{c_i} = 0.5$, a model $P_i$ is selected, and then a sub-model $P_i^j$ is obtained through sampling based on current a. A sampling method is to randomly generate a random number r for each type of constraint. If $r \le \alpha_{c_i}$, the type of constraints and corresponding variables are included in the sub-model, and a time taken to construct the sub-model is recorded as $T_a$. The linear-programming solver is invoked to solve the sub-model (including a total of $K$ types of constraints $c_{j1}, \ldots, c_{jK}$), to obtain an optimal solution S of the sub-model. A time spent in solving the sub-model is recorded as $T_b$. Then a solution of the sub-model is brought as an initial solution into the original model $P_i$, and $P_i$ is solved again, where a time required for this step is $T_c$. Finally, a total time obtained through the solving with importance sampling is recorded as $T_j = T_a + T_b + T_c$, and importance probability $\alpha$ is updated by using the recorded $T_j$. For each type of constraint $c_{j1}$ in the sub-model, the following updating formula is executed:

$$\alpha_{c_{j_1}} = \min(\alpha_{c_{j_1}} + \rho \times \frac{T_{P_i} - T_j}{K}, 1)$$

; a model is selected again to perform an updating operation until a quantity of times of updating is reached, and trained a is obtained; a production scheduling model at a current latest moment is obtained, a sub-model is sampled based on the trained a in historical data, and then the sub-model is solved to obtain a solution S of the sub-model; and S is brought as an initial value into an original model, and the original model is solved to obtain a real-number solution of the production scheduling issue.

For a minimum-batch constraint in a production scheduling issue, a daily manufacturing volume is either equal to 0 or greater than or equal to a constant C. Because this constraint cannot be considered when a linear-programming model is being established, a continuous solving method may be used herein to add a constraint in the following style to a solved model: $x_i + s_j \geq C$, where $x_i$ is a variable that is greater than 0 and that is obtained through the foregoing standard solving, and $s_j$ is a newly-added relaxation variable. In addition, $s_j$ is added to an objective function. In this case, a model to which the constraint has been added is solved again, to achieve such an effect that $x_i$ can be, as much as possible, greater than or equal to the relaxation variable $s_j$ newly added in $C$; and an upper bound $s_j^{UB} = C$ is set for the variable, and status($s_j$) = *atUpperBound* is set before solving. Then a model, in which an initial state of the relaxation variable has been modified, is solved to obtain a solution. After the steps, solving of the model of the production scheduling issue is completed.

Table 1 shows improvement effect of solving according to this embodiment of this application. Compared with direct solving, the solving method in this embodiment of this application improves efficiency by about 20% on average.

**Table 1**

| 20Days | Warm Start | | | | Direct Solve | Improve Rate |
|---|---|---|---|---|---|---|
| | pick_sub | solve_sub | transfer_time | warmStart_ total_time | direct_solve_ total_time | percentage |
| 20200503 | 0.978747 | 262.022 | 53.472 | 346.041 | 421.706 | 0.179425951 |
| 20200504 | 1.14935 | 292.432 | 166.302 | 488.265 | 560.273 | 0.1285230 |
| 20200505 | 1.12718 | 253.402 | 65.392 | 347.18 | 427.113 | 0.187147195 |
| 20200506 | 1.12473 | 288.012 | 122.382 | 440.941 | 960.26 | 0. 540810822 |
| 20200507 | 1.19738 | 258.822 | 65.832 | 354.742 | 431.39 | 0.177676812 |
| 20200508 | 1.12281 | 378.292 | 188.472 | 598.484 | 1000 | 0.401516 |
| 20200509 | 1.11446 | 260.312 | 95.242 | 385.103 | 612.242 | 0.370995456 |
| 20200510 | 1.03053 | 262.692 | 97.532 | 392.115 | 537.138 | 0.269992069 |
| 20200511 | 1.04711 | 260.552 | 47.882 | 339.194 | 435.323 | 0. 22082224 |
| 20200512 | 1.14782 | 314.22 | 108.692 | 456.993 | 465.657 | 0.01860597 |
| 20200513 | 1.13379 | 309.352 | 153.812 | 495.44 | 1000 | 0.50456 |
| 20200514 | 1.17397 | 364.712 | 100.512 | 496.801 | 762.722 | 0.348647345 |

An embodiment of this application provides a task solving method. The method includes: obtaining a first linear-programming task, where the first linear-programming task includes a plurality of first scheduling constraints; obtaining importance of each first scheduling constraint in the plurality of first scheduling constraints, where the importance indicates a degree of contribution of the first scheduling constraint to reducing a time for solving the first linear-programming task; sampling the plurality of first scheduling constraints based on the importance, to obtain a subset of the obtained plurality of first scheduling constraints, where the importance is used to determine sampling probability of the first scheduling constraints; constructing a second linear-programming task based on the subset of the plurality of first scheduling constraints; solving the second linear-programming task, to obtain a first solving result; and using the first solving result as an initial value of the first linear-programming task, and solving an initialized first linear-programming task, to obtain a second solving result. In the foregoing manner, on one hand, key constraints in the first linear-programming task are selected to construct a sub-model (the second linear-programming task), and then a solution of the sub-model is used to solve the first linear-programming task, to accelerate a solving process. On the other hand, when the sub-model is being constructed, sampling is performed on the first linear-programming task based on the importance. Because the importance represents a degree of contribution of the first scheduling constraint to reducing the time for solving the first linear-programming task, the solution of the sub-model obtained through sampling is close to an optimal solution, thereby accelerating a process of solving the first linear-programming task.

An embodiment of this application further provides a system. The system may include a terminal device and a server. The terminal device may send a to-be-solved model (a first linear-programming task) and prior information that includes a plurality of historical models to the server. The server may perform computing based on the prior information that includes the plurality of historical models, to obtain converged importance; sample the first linear-programming task based on the importance; perform steps 301 to 303 in the foregoing embodiment, to obtain a second solving result; and return the second solving result to the terminal device.

In addition, the terminal device may send, to the server, a to-be-solved model and prior information that includes a plurality of historical models (including a first linear-programming task); and the server may perform computing based on the prior information that includes the plurality of historical models, to obtain converged importance (for a computing process, refer to descriptions related to importance updating in the foregoing embodiment), sample the to-be-solved model based on the importance, and solve the to-be-solved model.

Refer to FIG. 6. FIG. 6 is a schematic diagram of a structure of a task solving apparatus 600 according to an embodiment of this application. As shown in FIG. 6, the apparatus 600 may include:

an obtaining module 601, configured to obtain a first linear-programming task, where the first linear-programming task includes a plurality of first scheduling constraints; and

obtain importance of each first scheduling constraint in the plurality of first scheduling constraints, where the importance indicates a degree of contribution of the first scheduling constraint to reducing a time for solving the first linear-programming task; and

for a specific description of the obtaining module 601, reference may be made to descriptions of steps 301 and 302 in the foregoing embodiment, and details are not described herein again;

a sampling module 602, configured to sample the plurality of first scheduling constraints based on the importance, to obtain a subset of the obtained plurality of first scheduling constraints, where the importance is used to determine sampling probability of the first scheduling constraints; and

construct a second linear-programming task based on the subset of the plurality of first scheduling constraints; where

for a specific description of the sampling module 602, reference may be made to descriptions of steps 303 and 304 in the foregoing embodiment, and details are not described herein again; and

a solving module 603, configured to solve the second linear-programming task, to obtain a first solving result; and

use the first solving result as an initial value of the first linear-programming task, and solve an initialized first linear-programming task, to obtain a second solving result; where

for a specific description of the solving module 603, reference may be made to descriptions of steps 305 and 306 in the foregoing embodiment, and details are not described herein again.

In a possible implementation, both the first linear-programming task and the second linear-programming task include a programming objective.

In a possible implementation, the obtaining module 601 is further configured to:

obtain a first solving time for solving the second linear-programming task and a second solving time for solving the initialized first linear-programming task;

the solving module is further configured to solve the first linear-programming task, to obtain a third solving time for solving the first linear-programming task; and

the apparatus 600 further includes:

an importance updating module, configured to update, based on a reduction degree of an additive sum of the first solving time and the third solving time relative to the first solving time, the importance of each first scheduling constraint, where the updated importance is positively correlated with the reduction degree.

In a possible implementation, the obtaining module 601 is further configured to:

obtain a sampling time for sampling the plurality of first scheduling constraints; and

the importance updating module is specifically configured to:

update, based on a reduction degree of an additive sum of the first solving time, the third solving time, and the sampling time relative to the first solving time, the importance of each first scheduling constraint.

In a possible implementation, the obtaining module 601 is further configured to:

obtain a third linear-programming task, where the third linear-programming task includes a plurality of the second scheduling constraints, and the plurality of second scheduling constraints and the plurality of first scheduling constraints are of a same constraint type; and

obtain importance of each second scheduling constraint in the plurality of second scheduling constraints, where the updated importance of each first scheduling constraint is used as importance of the second scheduling constraints that are of the same constraint type; and

the sampling module 602 is further configured to:

sample the plurality of second scheduling constraints based on the importance of each second scheduling constraint, to obtain a fourth linear-programming task, where the importance of each second scheduling constraint is used to determine sampling probability of the second scheduling constraint, and the fourth linear-programming task includes a portion of the plurality of second scheduling constraints; and
the solving module 603 is further configured to:

solve the fourth linear-programming task, to obtain a third solving result; and
use the third solving result as an initial value of the third linear-programming task, and solve an initialized third linear-programming task, to obtain a fourth solving result.

In a possible implementation, the second linear-programming task includes M solving variables, and the first solving result includes parameter values of various solving variable; and

the solving module 603 is specifically configured to:
use the parameter values of various solving variables in the first solving result as parameter values of M solving variables in the first linear-programming task.

In a possible implementation, the first linear-programming task is used to allocate a scheduling resource to at least one to-be-scheduled task, the first scheduling constraints are constraints that the scheduling resource meets, and the scheduling resource is a production line, or production equipment, or a manufacturer.

In a possible implementation, the obtaining module 601 is further configured to:

obtain a second scheduling constraint after the second solving result is obtained, where the second scheduling constraint includes an objective solving variable and a relaxation variable; and
the solving module 603 is further configured to: add the second scheduling constraint to the first linear-programming task, to obtain an updated first linear-programming task, and solve the updated first linear-programming task.

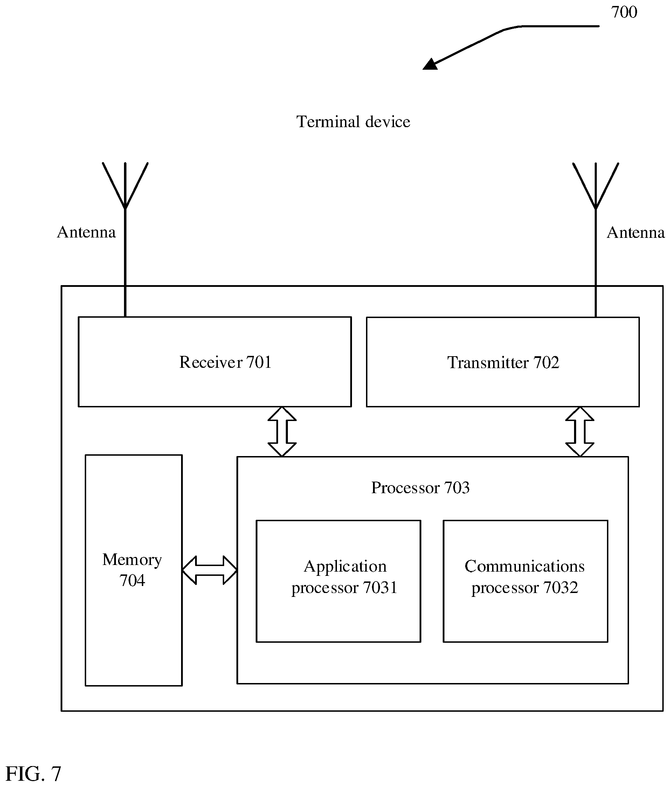

The following describes a terminal device provided in an embodiment of this application. Refer to FIG. 7. FIG. 7 is a schematic diagram of a structure of a terminal device 700 according to an embodiment of this application. The terminal device 700 may be specifically represented as a mobile phone, a tablet computer, a notebook computer, an intelligent wearable device, a server, or the like. This is not limited herein. The task solving apparatus described in the embodiment corresponding to FIG. 6 may be deployed on the terminal device 700, and is configured to implement a task solving function in the embodiment corresponding to FIG. 6. Specifically, the terminal device 700 includes a receiver 701, a transmitter 702, a processor 703, and a memory 704 (there may be one or more processors 703 in the terminal device 700, where one processor is used as an example in FIG. 7). The processor 703 may include an application processor 7031 and a communications processor 7032. In some embodiments of this application, the receiver 701, the transmitter 702, the processor 703, and the memory 704 may be connected through a bus or in another manner.

The memory 704 may include a read-only memory and a random access memory, and provide instructions and data to the processor 703. A part of the memory 704 may further include a non-volatile random access memory (non-volatile random access memory, NVRAM). The memory 704 stores processor instructions and operation instructions, an executable module or a data structure, or a subset thereof, or an extended set thereof. The operation instructions may include various operation instructions used to implement various operations.

The processor 703 controls operations of the terminal device 700. During specific application, components of the terminal device 700 are coupled together through a bus system. The bus system may further include a power bus, a control bus, a state signal bus, and the like, in addition to a data bus. However, for clear description, various types of buses in the figure are collectively referred to as a bus system.

The method disclosed in the foregoing embodiment of this application may be applied to the processor 703, or may be implemented by the processor 703. The processor 703 may be an integrated circuit chip and has a signal processing capability. In an implementation process, steps in the foregoing method may be implemented by using a hardware integrated logical circuit in the processor 703, or by using instructions in a form of software. The processor 703 may be a general-purpose processor, a digital signal processor (digital signal processor, DSP), a microprocessor, or a microcontroller; and may further include an application-specific integrated circuit (application-specific integrated circuit, ASIC), a field-programmable gate array (field-programmable gate array, FPGA) or another programmable logic device, a discrete gate, or a transistor logic device, or a discrete hardware component. The processor 703 may implement or perform the method, steps, and logical block diagrams disclosed in embodiments of this application. The general-purpose processor may be a microprocessor, or the processor may be any conventional processor or the like. Steps of the method disclosed with reference to embodiments of this application may be directly executed and completed by a hardware decoding processor, or may be executed and completed by using a combination of hardware and software modules in the decoding processor. The software modules may be located in a mature storage medium in the art, for example, a random access memory, a flash memory, a read-only memory, a programmable read-only memory, an electrically erasable programmable memory, or a register. The storage medium is located in the memory 704, and the processor 703 reads information in the memory 704 and completes steps related to the terminal device in the foregoing method in combination with hardware of the processor 703.

The receiver 701 may be configured to receive input digital or character information, and generate signal inputs related to related setting and function control of the terminal device. The transmitter 702 may be configured to output digital or character information through a first interface. The transmitter 702 may be further configured to send instructions to a disk group through the first interface, to modify data in the disk group. The transmitter 702 may further include a display device such as a display screen.

In this embodiment of this application, in one case, the processor 703 is configured to perform steps performed by the terminal device in the foregoing embodiment.

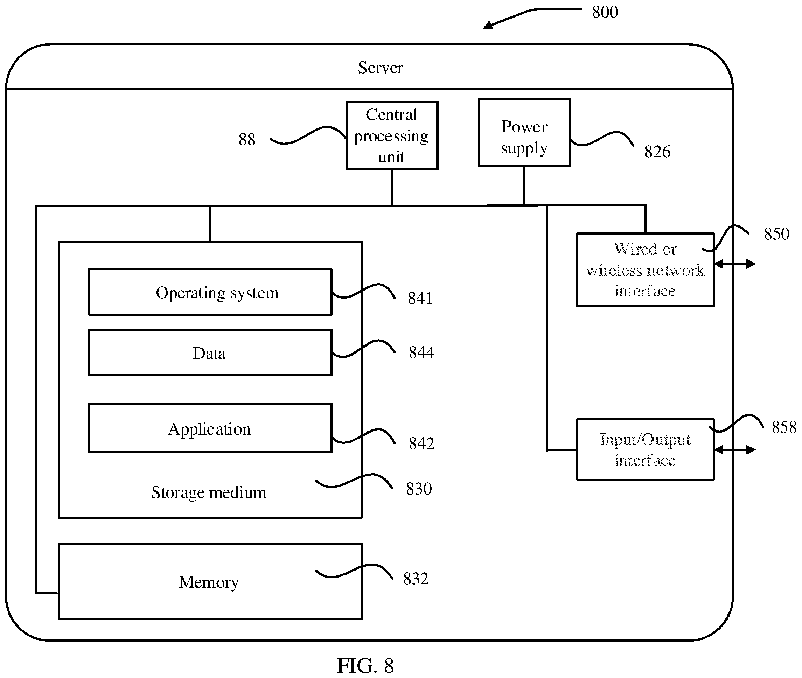

An embodiment of this application further provides a server. Refer to FIG. 8. FIG. 8 is a schematic diagram of a structure of a server 800 according to an embodiment of this application. Specifically, the server 800 is implemented by one or more servers. The server 800 may differ greatly due to different configurations or performance, and may include one or more central processing units (central processing units, CPU) 88 (for example, one or more processors) and a memory 832, and one or more storage media 830 (for example, one or more mass storage devices) that store an application program 842 or data 844. The memory 832 and the storage medium 830 may be used for transient storage or persistent storage. A program stored in the storage medium 830 may include one or more modules (not shown in FIG. 8), and each module may include a series of instruction operations on the server. Further, the central processing unit 88 may be configured to communicate with the storage medium 830, to perform a series of instruction operations in the storage medium 830 on the server 800.

The server 800 may further include one or more power supplies 826, one or more wired or wireless network interfaces 850, and one or more input/output interfaces 858; or one or more operating systems 841, for example, Windows Server™, Mac OS X™, Unix™, Linux™, and FreeBSD™.

In this embodiment of this application, the central processing unit 88 is configured to perform steps related to the task solving method in the foregoing embodiment.

An embodiment of this application further provides a computer program product. When the computer program product runs on a computer, the computer is enabled to perform steps performed by the terminal device or the computer is enabled to perform steps performed by the server.

An embodiment of this application further provides a computer-readable storage medium. The computer-readable storage medium stores a program used for signal processing. When the program runs on a computer, the computer is enabled to perform steps performed by the terminal device or the computer is enabled to perform steps performed by the server.

The terminal device, the server device, or the apparatus in embodiments of this application may be specifically a chip. The chip includes a processing unit and a communications unit. The processing unit may be, for example, a processor. The communications unit may be, for example, an input/output interface, a pin, or a circuit. The processing unit may execute computer-executable instructions stored in a storage unit, so that a chip in the terminal device performs the task solving method described in the foregoing embodiment, or a chip in the server performs the task solving method described in the foregoing embodiment. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

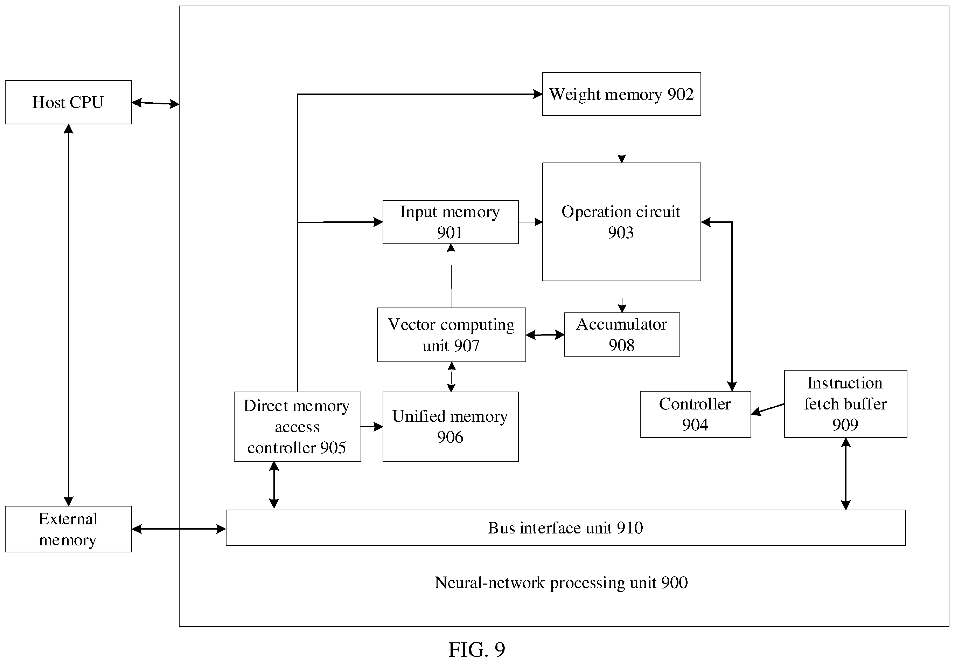

Specifically, refer to FIG. 9. FIG. 9 is a schematic diagram of a structure of a chip according to an embodiment of this application. The chip may be represented as a neural-network processing unit NPU 900. The NPU 900 is mounted to a host CPU (Host CPU) as a coprocessor, and the host CPU allocates a task. A core part of the NPU is an operation circuit 903. A controller 904 controls the operation circuit 903 to extract matrix data in a memory and perform a multiplication operation.

In some implementations, the operation circuit 903 internally includes a plurality of processing engines (Processing Engine, PE). In some implementations, the operation circuit 903 is a two-dimensional systolic array. The operation circuit 903 may alternatively be a one-dimensional systolic array or another electronic circuit that can perform mathematical operations such as multiplication and addition. In some implementations, the operation circuit 903 is a general-purpose matrix processor.

For example, it is assumed that there is an input matrix A, a weight matrix B, and an output matrix C. The operation circuit 903 fetches data corresponding to the matrix B from a weight memory 902, and buffers the data in each PE in the operation circuit 903. The operation circuit 903 fetches data of the matrix A from an input memory 901, to perform a matrix operation on the matrix B, and stores an obtained partial or final result of the matrixes into an accumulator (accumulator) 908.

A unified memory 906 is configured to store input data and output data. Weight data is directly transferred to the weight memory 902 by using a direct memory access controller (Direct Memory Access Controller, DMAC) DMAC 905. Input data is also transferred to the unified memory 906 by using the DMAC.

A BIU (Bus Interface Unit), that is, a bus interface unit 910, is configured to perform interaction between an AXI bus and the DMAC and between the AXI bus and an instruction fetch buffer (Instruction Fetch Buffer, IFB) 909.

The bus interface unit (Bus Interface Unit, BIU for short) 910 is used by the instruction fetch buffer 909 to obtain instructions from an external memory, and is further used by the direct memory access controller 905 to obtain original data of the input matrix A or the weight matrix B from an external memory.

The DMAC is mainly configured to transfer input data in an external memory DDR to the unified memory 906, or transfer weight data to the weight memory 902, or transfer input data to the input memory 901.

A vector computing unit 907 includes a plurality of operation processing units, and performs, if needed, further processing, for example, vector multiplication, vector addition, an exponential operation, a logarithmic operation, or size comparison, on an output of the operation circuit 903. The vector computing unit 907 is mainly configured to perform network computing at a non-convolutional/fully-connected layer in a neural network, for example, batch normalization (batch normalization), pixel-level summation, and up-sampling on a feature plane.

In some implementations, the vector computing unit 907 can store a processed output vector into the unified memory 906. For example, the vector computing unit 907 may apply a linear function or a nonlinear function to an output of the operation circuit 903, for example, to perform linear interpolation on a feature plane extracted at a convolutional layer; or for another example, apply a linear function or a nonlinear function to an accumulated sum of a vector to generate an activation value. In some implementations, the vector computing unit 907 generates a normalized value, a pixel-level summation value, or both. In some implementations, a processed output vector can be used as an activation input of the operation circuit 903, for example, for use at a subsequent layer in the neural network.

The instruction fetch buffer (instruction fetch buffer) 909 connected to the controller 904 is configured to store instructions for use by the controller 904.

The unified memory 906, the input memory 901, the weight memory 902, and the instruction fetch buffer 909 are all on-chip memories. The external memory is private to a hardware architecture of the NPU.

The foregoing mentioned processor may be a general-purpose central processor, a microprocessor, an ASIC, or one or more integrated circuits for controlling program execution.

In addition, it needs to be noted that the foregoing described apparatus embodiments are merely examples. The units described as separate parts may or may not be physically separate, and parts displayed as units may or may not be physical units, may be located in one position, or may be distributed on a plurality of network units. Some or all modules may be selected according to an actual need to achieve the objectives of the solutions of the embodiments. In addition, in the accompanying drawings of the apparatus embodiments provided in this application, connection relationships between modules indicate that the modules have communication connections with each other, which may be specifically implemented as one or more communications buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Usually, a function implemented by a computer program may be easily implemented by using corresponding hardware. In addition, specific hardware structures used to implement a same function may be varied, for example, an analog circuit, a digital circuit, or a dedicated circuit. However, in this application, a software program implementation is a better implementation in most cases. Based on such an understanding, the technical solutions of this application essentially or the part contributing to a conventional technology may be implemented in a form of a computer software product. The computer software product is stored in a readable storage medium, such as a floppy disk, a USB flash drive, a removable hard disk, a ROM, a RAM, a magnetic disk, or an optical disc of a computer; and includes several instructions for instructing a computer device (which may be a personal computer, a server, or a network device, or the like) to perform the method described in embodiments of this application.

All or some of the foregoing embodiments may be implemented by software, hardware, firmware, or any combination thereof. When software is used to implement the embodiments, all or some of the embodiments may be implemented in a form of a computer program product.

The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to a computer, or a data storage device integrating one or more usable media, for example, a server or a data center. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

**Claims**

1. A task solving method, wherein the method comprises:

    obtaining a first linear-programming task, wherein the first linear-programming task comprises a plurality of first scheduling constraints;
    obtaining importance of each first scheduling constraint in the plurality of first scheduling constraints, wherein the importance indicates a degree of contribution of the first scheduling constraint to reducing a time for solving the first linear-programming task;
    sampling the plurality of first scheduling constraints based on the importance, to obtain a subset of the obtained plurality of first scheduling constraints, wherein the importance is used to determine sampling probability of the first scheduling constraints;
    constructing a second linear-programming task based on the subset of the plurality of first scheduling constraints;
    solving the second linear-programming task, to obtain a first solving result; and
    using the first solving result as an initial value of the first linear-programming task, and solving an initialized first linear-programming task, to obtain a second solving result.

2. The method according to claim 1, wherein both the first linear-programming task and the second linear-programming task comprise a programming objective.

3. The method according to claim 1 or 2, wherein the method further comprises:

    obtaining a first solving time for solving the second linear-programming task and a second solving time for solving the initialized first linear-programming task;
    solving the first linear-programming task, to obtain a third solving time for solving the first linear-programming task; and
    updating, based on a reduction degree of an additive sum of the first solving time and the third solving time relative to the first solving time, the importance of each first scheduling constraint, wherein the updated importance is positively correlated with the reduction degree.

4. The method according to claim 3, wherein the method further comprises: obtaining a sampling time for sampling the plurality of first scheduling constraints; and
    the updating, based on a reduction degree of an additive sum of the first solving time and the third solving time relative to the first solving time, the importance of each first scheduling constraint comprises:
    updating, based on a reduction degree of an additive sum of the first solving time, the third solving time, and the sampling time relative to the first solving time, the importance of each first scheduling constraint, to obtain updated importance of each first scheduling constraint.

5. The method according to claim 3 or 4, wherein the method further comprises:

    obtaining a third linear-programming task, wherein the third linear-programming task comprises a plurality of the second scheduling constraints, and the plurality of second scheduling constraints and the plurality of first scheduling constraints are of a same constraint type;
    obtaining importance of each second scheduling constraint in the plurality of second scheduling constraints, wherein the updated importance of each first scheduling constraint is used as importance of the second scheduling constraints that are of the same constraint type;
    sampling the plurality of second scheduling constraints based on the importance of each second scheduling constraint, to obtain a fourth linear-programming task, wherein the importance of each second scheduling constraint is used to determine sampling probability of the second scheduling constraint, and the fourth linear-programming task comprises a portion of the plurality of second scheduling constraints;
    solving the fourth linear-programming task, to obtain a third solving result; and
    using the third solving result as an initial value of the third linear-programming task, and solving an initialized third linear-programming task, to obtain a fourth solving result.

6. The method according to any one of claims 1 to 5, wherein the second linear-programming task comprises M solving variables, and the first solving result comprises parameter values of various solving variable; and
the using the first solving result as an initial value of the first linear-programming task comprises:
using the parameter values of various solving variables in the first solving result as parameter values of M solving variables in the first linear-programming task.

7. The method according to any one of claims 1 to 6, wherein the first linear-programming task is used to allocate a scheduling resource to at least one to-be-scheduled task, the first scheduling constraints are constraints that the scheduling resource meets, and the scheduling resource is a production line, or production equipment, or a manufacturer.

8. The method according to any one of claims 1 to 7, wherein after the obtaining a second solving result, the method further comprises:

obtaining a second scheduling constraint, wherein the second scheduling constraint comprises a relaxation variable and an upper bound of the relaxation variable; and
adding the second scheduling constraint to the first linear-programming task, to obtain an updated first linear-programming task, and solving the updated first linear-programming task.

9. A task solving apparatus, wherein the apparatus comprises:

an obtaining module, configured to obtain a first linear-programming task, wherein the first linear-programming task comprises a plurality of first scheduling constraints; and
obtain importance of each first scheduling constraint in the plurality of first scheduling constraints, wherein the importance indicates a degree of contribution of the first scheduling constraint to reducing a time for solving the first linear-programming task;
a sampling module, configured to sample the plurality of first scheduling constraints based on the importance, to obtain a subset of the obtained plurality of first scheduling constraints, wherein the importance is used to determine sampling probability of the first scheduling constraints; and
construct a second linear-programming task based on the subset of the plurality of first scheduling constraints; and
a solving module, configured to solve the second linear-programming task, to obtain a first solving result; and use the first solving result as an initial value of the first linear-programming task, and solve an initialized first linear-programming task, to obtain a second solving result.

10. The apparatus according to claim 9, wherein both the first linear-programming task and the second linear-programming task comprise a programming objective.

11. The apparatus according to claim 9 or 10, wherein the obtaining module is further configured to:

obtain a first solving time for solving the second linear-programming task and a second solving time for solving the initialized first linear-programming task;
the solving module is further configured to solve the first linear-programming task, to obtain a third solving time for solving the first linear-programming task; and
the apparatus further comprises:
an importance updating module, configured to update, based on a reduction degree of an additive sum of the first solving time and the third solving time relative to the first solving time, the importance of each first scheduling constraint, wherein the updated importance is positively correlated with the reduction degree.

12. The apparatus according to claim 11, wherein the obtaining module is further configured to:

obtain a sampling time for sampling the plurality of first scheduling constraints; and
the importance updating module is specifically configured to:
update, based on a reduction degree of an additive sum of the first solving time, the third solving time, and the sampling time relative to the first solving time, the importance of each first scheduling constraint.

13. The apparatus according to claim 11 or 12, wherein the obtaining module is further configured to:

obtain a third linear-programming task, wherein the third linear-programming task comprises a plurality of the second scheduling constraints, and the plurality of second scheduling constraints and the plurality of first scheduling constraints are of a same constraint type; and

obtain importance of each second scheduling constraint in the plurality of second scheduling constraints, wherein the updated importance of each first scheduling constraint is used as importance of the second scheduling constraints that are of the same constraint type;

the sampling module is further configured to:

sample the plurality of second scheduling constraints based on the importance of each second scheduling constraint, to obtain a fourth linear-programming task, wherein the importance of each second scheduling constraint is used to determine sampling probability of the second scheduling constraint, and the fourth linear-programming task comprises a portion of the plurality of second scheduling constraints; and

the solving module is further configured to:

solve the fourth linear-programming task, to obtain a third solving result; and
use the third solving result as an initial value of the third linear-programming task, and solve an initialized third linear-programming task, to obtain a fourth solving result.

14. The apparatus according to any one of claims 9 to 13, wherein the second linear-programming task comprises M solving variables, and the first solving result comprises parameter values of various solving variables; and
the solving module is specifically configured to:
use the parameter values of various solving variable in the first solving result as parameter values of M solving variables in the first linear-programming task.

15. The apparatus according to any one of claims 9 to 14, wherein the first linear-programming task is used to allocate a scheduling resource to at least one to-be-scheduled task, the first scheduling constraints are constraints that the scheduling resource meets, and the scheduling resource is a production line, or production equipment, or a manufacturer.

16. The apparatus according to any one of claims 9 to 15, wherein the obtaining module is further configured to:

obtain a second scheduling constraint after the second solving result is obtained, wherein the second scheduling constraint comprises a relaxation variable and an upper bound of the relaxation variable; and
the solving module is further configured to: add the second scheduling constraint to the first linear-programming task, to obtain an updated first linear-programming task, and solve the updated first linear-programming task.

17. A computer storage medium, wherein the computer storage medium stores one or more instructions, and when the instructions are executed by one or more computers, the one or more computers are enabled to perform operations for the method according to any one of claims 1 to 8.

18. A computer program product, comprising computer-readable instructions, wherein when the computer-readable instructions are run on a computer, the computer is enabled to perform the method according to any one of claims 1 to 8.

19. A system, comprising at least one processor, at least one memory, and at least one communications interface, wherein the processor, the memory, and the communications interface are connected and communicate with each other by using a communications bus;

the at least one memory is configured to store code;
the at least one processor is configured to execute the code, to perform the task solving method according to any one of claims 1 to 8, to obtain a solving result; and
the at least one communications interface is configured to communicate with a device or a communications network, to send the solving result to the device or the communications network.

| Terminal device | ← → | Server |

FIG. 1

FIG. 2

Obtain a first linear-programming task, where the first linear-programming task includes a plurality of first programming constraints — 301

Obtain importance of each first programming constraint in the plurality of first programming constraints, where the importance indicates a degree of contribution of the first programming constraint to reducing a time for solving the first linear-programming task — 302

Sample the plurality of first programming constraints based on the importance, to obtain a subset of the obtained plurality of first programming constraints, where the importance is used to determine sampling probability of the first programming constraints — 303

Construct a second linear-programming task based on the subset of the plurality of first programming constraints — 304

Solve the second linear-programming task, to obtain a first solving result — 305

Use the first solving result as an initial value of the first linear-programming task, and solve an initialized first linear-programming task, to obtain a second solving result — 306

FIG. 3

FIG. 4

FIG. 5

FIG. 6

700

Terminal device

FIG. 7

FIG. 8

FIG. 9

## INTERNATIONAL SEARCH REPORT

| | International application No. |
|---|---|
| | **PCT/CN2022/121620** |

**A. CLASSIFICATION OF SUBJECT MATTER**

G06F 9/48(2006.01)i

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNTXT; CNABS; CNKI; WOTXT; USTXT; VEN; EPTXT: 约束, 解, 时间, 减少, 子集, 线性, 初始, 全局, constraint, solution, time, reduce, subset, linear, initial, global

**C. DOCUMENTS CONSIDERED TO BE RELEVANT**

| Category* | Citation of document, with indication, where appropriate, of the relevant passages | Relevant to claim No. |
|---|---|---|
| PX | CN 114237835 A (HUAWEI TECHNOLOGIES CO., LTD.) 25 March 2022 (2022-03-25) description, paragraphs 5-73 | 1-19 |
| Y | US 2012127893 A1 (MAY PATENTS LTD.) 24 May 2012 (2012-05-24) description, paragraphs 10-21 and 55-154 | 1-19 |
| Y | 隋建威 (SUI, Jianwei). "面向软件完整路径的测试用例生成技术研究 (Research on Full-Path Test Case Generation Technology)" 中国优秀硕士学位论文全文数据库信息科技辑 (Information & Technology, China Master's Theses Full-Text Database), 15 May 2021 (2021-05-15), ISSN: 1674-0246, chapter 4 | 1-19 |
| Y | 刘经德 (LIU, Jingde). "面向复杂运算程序的符号执行搜索策略研究 (A Search Strategy for the Symbolic Execution of the Programs with Complex Computations)" 中国优秀硕士学位论文全文数据库信息科技辑 (Information & Technology, China Master's Theses Full-Text Database), 15 March 2017 (2017-03-15), ISSN: 1674-0246, chapters 3-4 | 1-19 |
| A | US 2007198446 A1 (DAS, Indraneel et al.) 23 August 2007 (2007-08-23) entire document | 1-19 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 December 2022** | **28 December 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/121620**

C.     **DOCUMENTS CONSIDERED TO BE RELEVANT**

| Category* | Citation of document, with indication, where appropriate, of the relevant passages | Relevant to claim No. |
|---|---|---|
| A | US 6336110 B1 (TOSHIBA K. K.) 01 January 2002 (2002-01-01)<br>entire document | 1-19 |

Form PCT/ISA/210 (second sheet) (January 2015)

**INTERNATIONAL SEARCH REPORT**
Information on patent family members

International application No.

**PCT/CN2022/121620**

| Patent document cited in search report | | | Publication date (day/month/year) | Patent family member(s) | | | Publication date (day/month/year) |
|---|---|---|---|---|---|---|---|
| CN | 114237835 | A | 25 March 2022 | None | | | |
| US | 2012127893 | A1 | 24 May 2012 | US | 9007961 | B2 | 14 April 2015 |
| US | 2007198446 | A1 | 23 August 2007 | JP | 2007226772 | A | 06 September 2007 |
| | | | | EP | 1821164 | A2 | 22 August 2007 |
| | | | | DE | 602007003240 | D1 | 31 December 2009 |
| | | | | AT | 449366 | T | 15 December 2009 |
| | | | | EP | 1821164 | B1 | 18 November 2009 |
| US | 6336110 | B1 | 01 January 2002 | JP | H10275084 | A | 13 October 1998 |
| | | | | DE | 19814422 | A1 | 05 November 1998 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111166727